# EUROPEAN PATENT APPLICATION

(11) **EP 4 290 482 A1**
(43) Date of publication of application: **13.12.2023**
(21) Application number: 23157994.7
(22) Date of filing: 22.02.2023
(51) Int. Cl.: G06V 30/412, G06V 30/414

(54) **METHOD AND APPARATUS OF PROCESSING TEXT, ELECTRONIC DEVICE, STORAGE MEDIUM AND PROGRAM PRODUCT**

(30) Priority: 25.02.2022 CN 202210183469
(71) Applicant: Beijing Baidu Netcom Science Technology Co., Ltd., Beijing 100085 (CN)
(72) Inventor: XIANG, Yubo, Beijing, 100085 (CN); WANG, Jiayang, Beijing, 100085 (CN); HE, Huihui, Beijing, 100085 (CN); SHEN, Junyu, Beijing, 100085 (CN); SU, Cuicong, Beijing, 100085 (CN); ZHANG, Hongguang, Beijing, 100085 (CN)
(74) Representative: Stöckeler, Ferdinand

(57) **Abstract**

A method and an apparatus of processing a text, an electronic device, a storage medium, and a program product, which relates to a field of an image processing technology, in particular to a field of computer vision technology. The method includes: determining similarities between a plurality of fields contained in a text image to be processed and a plurality of predetermined field names; determining, from the plurality of fields, a field having a similarity greater than a similarity threshold as a target field name; determining a target field value corresponding to the target field name from M remaining field among the plurality of fields other than the target field name, where M≥1; and outputting a correspondence between the target field name and the target field value.

## Description

### TECHNICAL FIELD

The present disclosure relates to a field of an image processing technology, and in particular, to a field of computer vision technology. More specifically, the present disclosure provides a method and an apparatus of processing a text, an electronic device, a storage medium, and a computer program product.

### BACKGROUND

A large number of bills may be used in finance, retail and other industries, and some bills have similar content but different layouts. For example, for bank receipts used in the financial industry, different bank receipts may contain a same field, and a plurality of bank receipts may contain "payer", "payee", "account", and other fields. However, different bank receipts may be used by different banks, and sometimes different bank receipts may be used by a plurality of branches of a same bank in different regions. In order to know a business information involved in a bill, it is needed to summarize contents of a large number of bills.

### SUMMARY

The present disclosure provides a method and an apparatus of processing a text, an electronic device, a storage medium, and a computer program product.

According to an aspect of the present disclosure, a method of processing a text is provided, including: determining similarities between a plurality of fields contained in a text image to be processed and a plurality of predetermined field names; determining, from the plurality of fields, a field having a similarity greater than a similarity threshold as a target field name; determining a target field value corresponding to the target field name from M remaining field among the plurality of fields other than the target field name, where M≥1; and outputting a correspondence between the target field name and the target field value.

According to another aspect of the present disclosure, an apparatus of processing a text is provided, including: a similarity determination module configured to determine similarities between a plurality of fields contained in a text image to be processed and a plurality of predetermined field names; a first target field name determination module configured to determine, from the plurality of fields, a field having a similarity greater than a similarity threshold as a target field name; a target field value determination module configured to determine a target field value corresponding to the target field name from M remaining field among the plurality of fields other than the target field name, where M≥1; and an output module configured to output a correspondence between the target field name and the target field value.

According to another aspect of the present disclosure, an electronic device is provided, including: at least one processor; and a memory communicatively connected to the at least one processor, wherein the memory stores instructions executable by the at least one processor, and the instructions, when executed by the at least one processor, are configured to cause the at least one processor to implement the method provided by the present disclosure.

According to another aspect of the present disclosure, a non-transitory computer-readable storage medium having computer instructions therein is provided, and the computer instructions are configured to cause a computer system to implement the method provided by the present disclosure.

According to another aspect of the present disclosure, a computer program product containing a computer program is provided, and the computer program, when executed by a processor, is configured to cause the processor to implement the method provided by the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows a schematic diagram of an application scenario of a method and an apparatus of processing a text according to embodiments of the present disclosure;
FIG. 2A shows a schematic flowchart of a method of processing a text according to embodiments of the present disclosure;
FIG. 2B shows a schematic diagram of a text image to be processed according to embodiments of the present disclosure;
FIG. 2C shows a schematic diagram of a total distance involved in a first grouping scheme according to embodiments of the present disclosure;
FIG. 2D shows a schematic diagram of a total distance involved in a second grouping scheme according to embodiments of the present disclosure;
FIG. 3 shows a schematic flowchart of a method of processing a text according to other embodiments of the present disclosure;
FIG. 4A shows a schematic diagram of a method of processing a text according to embodiments of the present disclosure;
FIG. 4B shows a schematic diagram of a text image to be processed according to embodiments of the present disclosure;
FIG. 5 shows a schematic structural block diagram of an apparatus of processing a text according to embodiments of the present disclosure; and
FIG. 6 shows a structural block diagram of an electronic device for implementing a method of processing a text of embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following descriptions.

A text recognition may be performed on an image to return a text to be processed in the image progressively from top to bottom and from left to right, but a returned result lacks a structural information that may indicate a correspondence between a field and a field value involved in the text.

For example, if a purchase order is recognized, the returned result may include "name of product", "unit price of product", "quantity of product", "1000", "3" and other fields. However, according to the returned result, it is difficult to determine which of the value "1000" and the value "3" corresponds to the "unit price of product" and which corresponds to the "quantity of product".

For example, if a bank bill is recognized, the returned result may include a payer, a specific name of the payer, an account, a specific content of the account, a deposit bank, and a specific content of the deposit bank, but it is difficult to determine correspondences between the fields.

For example, if a train ticket is recognized, as a departure station, a train number and an arrival station are on a same line and are close in the image, the departure station, the train number and the arrival station may be easily recognized as one field in the returned result.

If a structural information is contained in the returned result, it may be conveniently used by a downstream task. For example, a total amount of the product may be calculated based on the unit price of the product and the quantity of the product.

In a technical solution, a template may be preset. When in use, an information in a bill is required to be filled in according to a format of the template, so that a structural information may be determined according to the format of the template after a content in the template is recognized. However, in the above-mentioned technical solution, a format of the bill is required to be exactly the same as the format of the template, otherwise the recognition may fail. In addition, for a secondarily printed bill, a content of the printed content may have a positional deviation from that of a bill base plate, for example, the content of the secondarily printed bill may be offset upwards relative to the bill base plate, which may interfere with the above scheme and affect an accuracy of the recognition result.

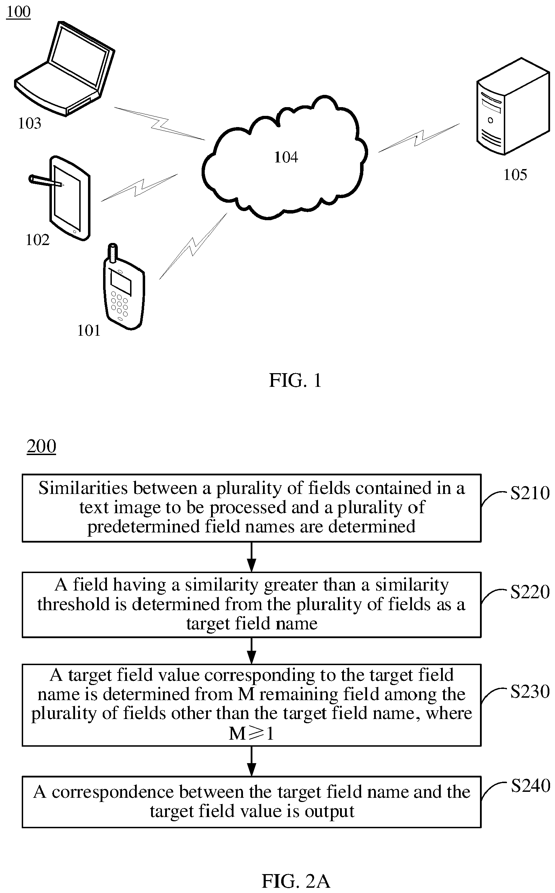

FIG. 1 shows a schematic diagram of an application scenario of a method and an apparatus of processing a text according to embodiments of the present disclosure.

It should be noted that FIG. 1 is merely an example of a system architecture to which embodiments of the present disclosure may be applied to help those skilled in the art understand the technical content of the present disclosure, but it does not mean that embodiments of the present disclosure may not be applied to other devices, systems, environments or scenarios.

As shown in FIG. 1, a system architecture 100 according to such embodiments may include terminal devices 101, 102 and 103, a network 104, and a server 105. The network 104 is used as a medium for providing a communication link between the terminal devices 101, 102, 103 and the server 105. The network 104 may include various connection types, such as wired and/or wireless communication links, and the like.

The terminal devices 101, 102 and 103 may be used by a user to interact with the server 105 through the network 104, so as to send or receive messages, etc. The terminal devices 101, 102 and 103 may be various electronic devices having display screens and supporting web browsing, including but not limited to smartphones, tablet computers, laptop computers, desktop computers, and so on.

The server 105 may be a server that provides various services, such as a background management server (for example only) that provides a support for a content browsed by the user using the terminal devices 101, 102 and 103. The background management server may analyze and process a received user request and other data, and feed back a processing result (for example, a target field name, a target field value and a correspondence generated according to the text image to be processed) to the terminal devices.

It should be noted that the method of processing the text provided by embodiments of the present disclosure may generally be performed by the server 105. Accordingly, the apparatus of processing the text provided by embodiments of the present disclosure may be generally provided in the server 105. The method of processing the text provided by embodiments of the present disclosure may also be performed by a server or server cluster different from the server 105 and capable of communicating with the terminal devices 101, 102, 103 and/or the server 105. Accordingly, the apparatus of processing the text provided by embodiments of the present disclosure may also be provided in a server or server cluster different from the server 105 and capable of communicating with the terminal devices 101, 102, 103 and/or the server 105.

It should be understood that a number of terminal devices, network and server in FIG. 1 are merely schematic. According to implementation needs, any number of terminal devices, networks and servers may be provided.

FIG. 2A shows a schematic flowchart of a method of processing a text according to embodiments of the present disclosure.

As shown in FIG. 2A, a method 200 of processing a text may include operation S210 to operation S240.

In operation S210, similarities between a plurality of fields contained in a text image to be processed and a plurality of predetermined field names are determined.

The text image to be processed may be an image of a document such as a bank bill and a purchase order. The text image to be processed may be recognized to obtain a plurality of fields.

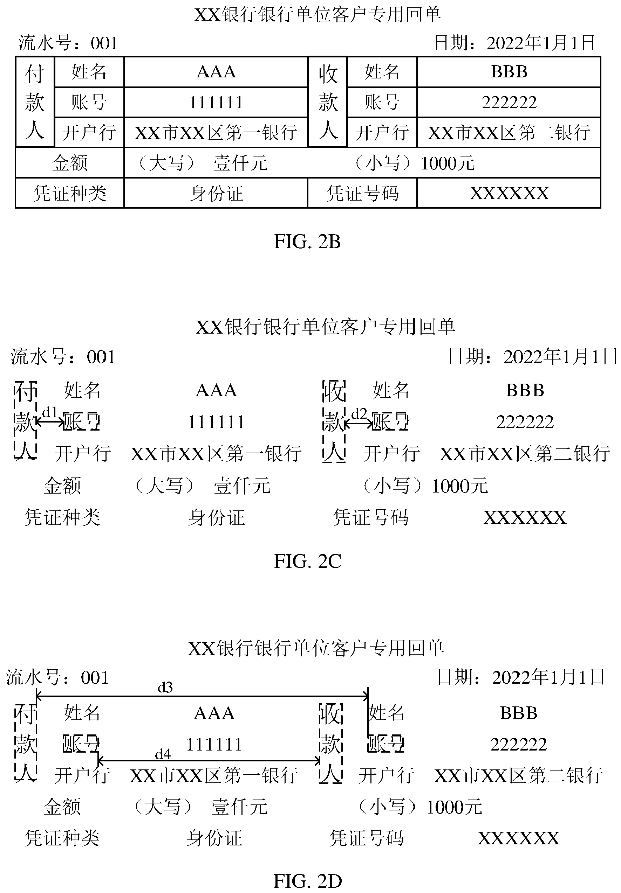

As shown in FIG. 2B, some fields in the text image to be processed may be referred to as field names, such as " 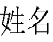 (name)", " 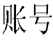 (account number)", " 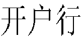 (deposit bank)", " 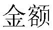 (amount)", and so on. The predetermined field names may be preset according to business requirements. For example, in a case that the text to be processed is a bank transfer remittance bill, the predetermined field names may include " 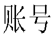 (account number)", " 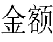 (amount)", " 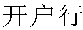 (deposit bank)", and so on. In a case that the text to be processed is a purchase order, the predetermined field names may include "name of product", "unit price of product", "quantity of product" and so on.

As shown in FIG. 2B, some other fields in the text image to be processed may be referred to as field values. A field value may represent a specific content of a field name. For example, the field value corresponding to " 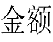 (amount)" may be "1000 7G(1000 yuan)" or " 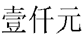 (one thousand yuan)", and the field value corresponding to " 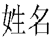 (name)" may be "AAA". The field value may also be irrelevant to the field name. For example, in a case that the text to be processed is a bank bill, the bank bill may have a header, such as " XX 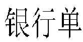 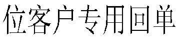 (special receipt for unit customer of XX bank)", and the header is a field value irrelevant to the field name.

The similarity between the field contained in the text image to be processed and the predetermined field name may be determined through a language model. For example, the field contained in the text image to be processed and the predetermined field may be input into the language model, and the language model extracts a feature of the field and a feature of the predetermined field respectively, so as to obtain two features. Then, the similarity may be calculated based on the two features. The language model may be ERNIE (Enhanced Representation through Knowledge Integration).

In operation S220, a field having a similarity greater than a similarity threshold is determined from the plurality of fields as a target field name.

If the similarity is greater than the similarity threshold, it means that the field is the same or similar to the predetermined field name.

In operation S230, a target field value corresponding to the target field name is determined from M remaining field among the plurality of fields other than the target field name, where M≥1.

In an example, it is possible to select one field from the plurality of fields as the target field, and determine a position information of the target field. For example, a region of a bounding rectangular box of the target field may be determined as the position information of the target field. Then, it may be possible to determine, from the M remaining field(s), a field with a minimum distance to the target field as a target field value corresponding to the target field name.

In another example, the target field value may be determined by: selecting, from the M remaining field(s), a field in the text image to be processed whose distance from the target field name is less than or equal to a predetermined distance, so as to obtain at least one candidate field; and determining, from the at least one candidate field, the target field value according to a type of the target field name and a type of the at least one candidate field.

For example, it is possible to determine the bounding rectangular box of each field, and then expand the bounding rectangular box of the target field upward, downward, leftward and rightward by the predetermined distance respectively, so as to obtain an expanded rectangular box. Then, a field indicated by a rectangular box having an overlapping region with the expanded rectangular box may be determined as a candidate field. The predetermined distance may be a width of five characters.

The type of the target field name may be preset. For example, if a target field name *a* is "amount", then the type of the "amount" may be a number type. For example, if a target field name *b* is "account", then the type of the target field name *b* may be a number type. For example, if a target field name *c* is "deposit bank", then the type of the target field name c may be an address type.

The type of the candidate field may be determined by means of image recognition. For example, if it is recognized that a field contains a plurality of numbers, the type of the field may be determined as the number type. For example, if it is recognized that a field contains an address information, such as "XX District, XX City", then the type of the field may be determined as the address type.

A candidate field having the same type as the target field name may be determined as a target field value corresponding to the target field name. In practical applications, at least one candidate field may be filtered according to the type of the target field name and the type of the at least one candidate field. For example, the type of the target field name *b* is the number type, and a candidate field of a non-number type may be filtered out using a regular expression. For example, the type of the target field name *c* is the address type, and a candidate field of a non-address type may be filter out using a natural language processing.

In examples of the present disclosure, the target field value may be selected accurately and quickly from fields near the target field name according to a relative position of the target field name and the candidate field, the type of the target field name, and the type of the candidate field.

In operation S240, a correspondence between the target field name and the target field value is output.

In an example, in a case that the field value represents the specific content of the field name, the correspondence may be returned to a user after it is obtained, so that the correspondence may be used by the user to determine a desired information. For example, it is possible to calculate a total amount of product No. 1 based on the field name "unit price of product No. 1", the field name "quantity of product No. 1", the field value corresponding to the field name "unit price of product No. 1", and the field value corresponding to the field name "quantity of product No. 1".

In another example, in a case that the field value is irrelevant to the field name, after the target field value corresponding to the target field name is determined, a plurality of remaining fields other than the target field name and the target field value contained in the text image to be processed may be matched with a predetermined field value, and if a remaining field is identical to the predetermined field value, the remaining field may be output. For example, a header "special receipt for unit customer of XX bank" may be preset as the predetermined field value, and the "special receipt for unit customer of XX bank" may be output if it is included in the remaining fields.

According to embodiments of the present disclosure, as the target field name is determined according to the similarities between the plurality of fields contained in the text image to be processed and the plurality of predetermined field names, embodiments of the present disclosure may be applied to a category of template, not limited to a fixed template, and have a wide range of applications.

According to other embodiments of the present disclosure, the method of processing the text may further include the following operations. After the target field name is determined, N target grouping fields and N repetitive fields are determined from the plurality of fields, where N≥2. The N target grouping fields and the N repetitive fields are grouped according to position information of the N target grouping fields and position information of the N repetitive fields in the text image to be processed, so as to obtain N field groups, and each of the N field groups includes one target grouping field and one repetitive field.

In an example, the target group field may be preset according to business requirements. For example, in a case that the text to be processed is a bank transfer remittance bill, the target grouping fields may include " 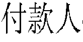 (payer)" and " 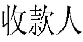 (payee)", and the repetitive fields may include two " 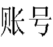 (account number)", two " 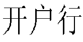 (deposit bank)", and so on. One of the two " 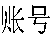 (account number)" is the account number of the payer, and the other is the account number of the payee.

According to embodiments provided in the present disclosure, the plurality of fields may be accurately grouped through the position information, so that an accuracy of the returned result may be ensured.

In a first example, the N field groups may be determined by the following operations. A target grouping field *d* is selected randomly from the N target grouping fields, then a repetitive field *e* closest to the target grouping field *d* is determined, and the target grouping field *d* and the repetitive field *e* are determined as a field group. Next, the target grouping field *d* is removed from the N target grouping fields, and the repetitive field *e* is removed from the N repetitive fields. Then, the operation of randomly selecting a target grouping field *d* from the N target grouping fields is performed repeatedly until the N field groups are obtained.

In a second example, the N field groups may be determined by the following operations. A plurality of grouping schemes are determined, and each grouping scheme of the plurality of grouping schemes is related to N candidate field groups. For each grouping scheme, field distances respectively corresponding to the N candidate field groups in the text image to be processed are determined, and a total distance is determined based on a sum of the field distances. The field distance corresponding to each candidate field group is a distance between the target grouping field and the repetitive field in the candidate field group. N candidate field groups related to a grouping scheme having a minimum total distance are determined as the N field groups.

With reference to FIG. 2C and FIG. 2D, a case that N=2, the predetermined grouping fields include " 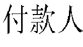 (payer)" and " 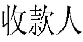 (payee)", and the repetitive fields include two " 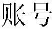 (account number)" is illustrated by way of example in describing the operation of determining N field groups in the above example.

As shown in FIG. 2C, table lines in FIG. 2B are omitted in FIG. 2C to facilitate marking a field distance d1 and a field distance d2. A dotted box shown in FIG. 2C represents a bounding rectangular box for a field, and the bounding rectangular box is used to indicate a position information of the field in the text image to be processed.

The " 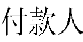 (payer)" and the left " 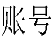 (account number)" may be divided into one candidate field group, and the " 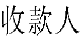 (payee)" and the right " 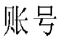 (account number)" may be divided into one candidate field group, so that the first grouping scheme is obtained. A total distance D1 of the first grouping scheme is a sum of the field distance d1 and the field distance d2, the field distance d1 is a distance between the " 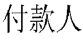 (payer)" and the left " 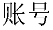 (account number)" in the text image to be processed, and the field distance d2 is a distance between the " 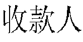 (payee)" and the right " 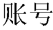 (account number)" in the text image to be processed.

As shown in FIG. 2D, the " 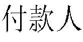 (payer)" and the right " 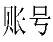 (account number)" may be divided into one candidate field group, and the " 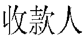 (payee)" and the left " 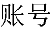 (account number)" may be divided into one candidate field group, so that the second grouping scheme is obtained. A total distance D2 of the second grouping scheme is a sum of a field distance d3 and a field distance d4, the field distance d3 is a distance between the " 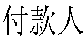 (payer)" and the right " 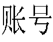 (account number)" in the text image to be processed, and the field distance d4 is a distance between the " 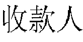 (payee)" and the left " 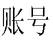 (account number)" in the text image to be processed.

The total distance D1 and the total distance D2 may be compared, the grouping scheme corresponding to the total distance having a smaller distance value is determined as the target grouping scheme, and the N candidate field groups involved in the target grouping scheme is determined as the N field groups. For example, as the total distance D1 is less than the total distance D2, the above-mentioned first grouping scheme is determined as the target grouping scheme, the " 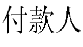 (payer)" and the left " 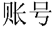 (account number) " are determined as one field group, and the " 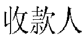 (payee)" and the right " 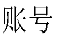 (account number)" are determined as one field group.

Different from the technical solution provided by the above-mentioned first example, the technical solution provided by the above-mentioned second example is implemented to determine the N field groups by minimizing the total distance, so that the plurality of fields may be grouped accurately, and the accuracy of the returned result may be ensured.

According to other embodiments of the present disclosure, the method of processing the text may further include performing a post-processing on the target field value.

In an example, the post-processing may include an operation of modifying a format of the target field value according to the type of the target field value.

The formats of the target field values of a same type may be unified into a same format, so that data may be viewed by the user conveniently. For example, after a plurality of texts to be processed are processed, a plurality of target field values representing dates may be obtained, for example, three target field values including "2022 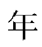 1 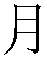 1 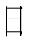 (01(date). 01(month). 2022)", "2022/1/7", " 2022-1-5" may be obtained. The format of the field value representing the date may be unified as "XXXX 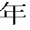 XX 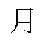 XX 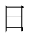 (XX(date). XX(month). XXXX(year))". For example, the format of the field value representing the amount may be unified.

In another example, the post-processing may include the following operations. If it is determined that two target field values having correspondences with a same target field name are a Chinese character numeral and an Arabic numeral and that a numeric value of the Chinese character numeral is different from a numeric value of the Arabic numeral, then the numeric value of the Arabic numeral is corrected with the numeric value of the Chinese character numeral.

For example, when the target field name is a field representing a numeral, such as "unit price", "quantity", "tax rate", "amount", or the like, the target field value corresponding to the target field name may be represented by a Chinese character numeral (such as " 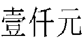 (one thousand yuan)"), or by an Arabic numeral (such as "1000 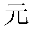 (1000 yuan)"). When the numeric value represented by the Chinese character numeral is not equal to the numeric value represented by the Arabic numeral, the numeric value represented by the Chinese character number shall prevail, so as to avoid an error in the field recognition process from affecting the accuracy of the recognition result.

According to other embodiments of the present disclosure, the method of processing the text may further include the following operation. It may be possible to determine, from a plurality of original fields contained in the text image to be processed, a field that is identical to any of the plurality of predetermined field names as the target field name. Then, fields among the plurality of original fields other than the target field name are determined as the plurality of fields contained in the text image to be processed. The above operation may be performed before performing the operation of determining the similarities between the plurality of fields contained in the text image to be processed and the plurality of predetermined field names.

For example, it is possible to search for the predetermined field name in the plurality of original fields, then determine a found original field same as the predetermined field name as the target field name, and remove the target field name from the plurality of original fields, so as to obtain a plurality of fields contained in the text to be processed.

The plurality of fields obtained through the above technical solution are not the same as the predetermined field names, but are likely to be similar to the predetermined field names. Therefore, the similarities between the plurality of fields and the predetermined field names may be calculated by a model.

In the technical solution provided by embodiments of the present disclosure, a plurality of original fields are compared with the predetermined field name, and the original field same as the predetermined field name is determined as the target field. In this process, there is no need to calculate the similarity, so that the target field may be determined quickly, and a processing efficiency may be improved. In addition, for at least one remaining field different from the predetermined field name, the similarity between the at least one remaining field and the predetermined field may be calculated, so that a generalization of the scheme may be improved.

According to other embodiments of the present disclosure, the method of processing the text may further include the following operations. The text image to be processed is recognized to obtain a plurality of tokens; and at least two tokens among the plurality of tokens are combined as a field according to a distance between the plurality of tokens in the text image to be processed and a semantic information of each token of the plurality of tokens, so as to obtain a plurality of fields.

For example, a pre-processing may be performed on the text image to be processed, and the pre-processing may include an objection detection, a cropping, a rotation, a correction, and other processes. For example, an object in a picture may be detected using an object detection model, and a blank region around the object may be cropped. The object detection model may be YOLO (You Only Look Once). Then, a direction of the text image to be processed may be predicted by an angle prediction model, and the text image to be processed may be rotated so that characters in the rotated text image to be processed are not inclined. Then, a correction such as flattening may be performed on a curved picture using a generative adversarial network.

For example, a text recognition may be performed on the text image to be processed by using an OCR (Optical Character Recognition) technology, so as to obtain characters contained in the text image to be processed. A dictionary may be pre-configured, and the dictionary includes some common professional terms, such as "account number", "amount", and so on. A tokenization may be performed on the recognized characters using the dictionary, so as to obtain a plurality of tokens. A position information of each token in the text image to be processed, such as a position of a bounding rectangular box of the token, may be determined by YOLO.

In an example, a quadtree may be built according to the position information of the plurality of tokens. The quadtree may be built as follows. The text image to be processed is divided into four quadrants. If it is determined that each quadrant contains at least two tokens, that quadrant is further divided into four smaller quadrants. The above operations are repeatedly performed until each quadrant contains only one token.

Then a token is selected as a target token, and in the text image to be processed, a candidate token whose distance from the target token is less than a threshold may be searched in specific directions such as up, down, left and right of the target token.

A combination rule may be preset, and tokens that may be combined are combined according to the preset combination rule. For example, it may be preset that "birth" and "date" may be combined into "date of birth".

The language model may be used to determine whether two tokens may be combined or not. For example, a semantic similarity between the candidate token and the target token may be determined using the language model, and a candidate token having a semantic similarity greater than a predetermined value in the at least one candidate token may be combined with the target token to form a new token. The language model may be ERNIE. For example, " 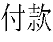 " and " 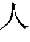 " may be combined into " 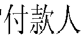 ". For example, if the field representing the address information is distributed in two lines due to a long character length, the two lines of characters may be combined into one field.

In another example, it is possible not to build a quadtree. For example, a token may be selected as the target token, then remaining tokens among all the tokens other than the target token may be traversed to determine a distance from each of the remaining tokens to the target token, and at least one remaining token whose distance is less than the distance threshold may be determined as the candidate token. Next, whether two tokens may be combined may be determined using a language model. The candidate token and the target token that may be combined are combined into a new token. The above operations may be repeatedly performed until the plurality of tokens in the text image to be processed may not be further combined. Then each of the plurality of tokens in the text image to be processed may be determined as a field.

According to embodiments of the present disclosure, at least two tokens may be combined into a field according to the distance between the plurality of tokens and the semantic information, and the field contained in the text to be processed may be determined accurately, so that an accuracy of a subsequent determination of the target field name and the target field value may be improved.

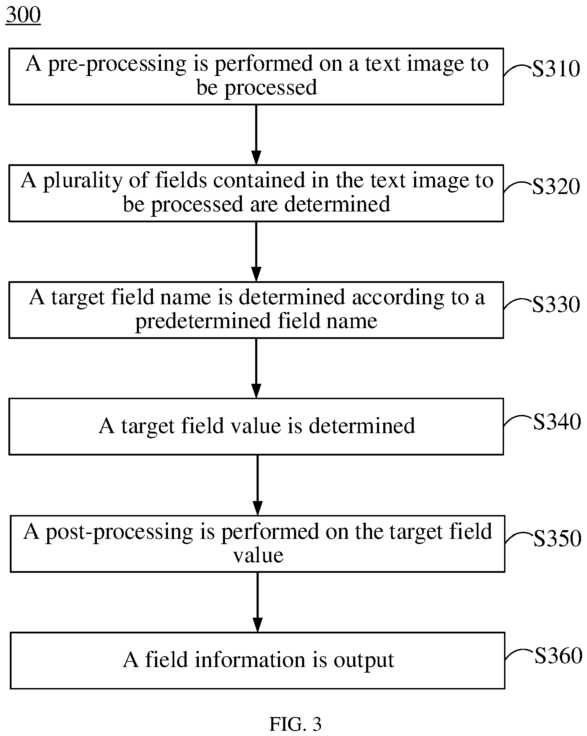

FIG. 3 shows a schematic flowchart of a method of processing a text according to other embodiments of the present disclosure.

As shown in FIG. 3, a method 300 of processing a text may include operation S310 to operation S360.

In operation S310, a pre-processing is performed on a text image to be processed.

For example, an object detection, a cropping, a rotation, a correction and other processing may be performed on the text image to be processed.

In operation S320, a plurality of fields contained in the text image to be processed are determined.

For example, the text image to be processed may be recognized to obtain a plurality of tokens. Then, at least two of the plurality of tokens are combined into a field according to the distance between the plurality of tokens in the text image to be processed and the semantic information of each of the plurality of tokens, so as to obtain a plurality of fields.

In operation S330, a target field name is determined according to a predetermined field name.

For example, for a field that is identical to the predetermined field name, it is possible to determine, from the plurality of fields, a field that is identical to any of the plurality of predetermined field names as the target field name.

For example, for a field different from the predetermined field name, it is possible to determine the field among the plurality of fields other than the field of the target field name as at least one remaining field, then determine the similarity between the at least one remaining field and the plurality of predetermined field names, and determine, from the plurality of fields, a field having a similarity greater than the similarity threshold as the target field name.

For example, for repetitive fields, it is possible to determine N target grouping fields and N repetitive fields from the plurality of fields, where N≥2. Then, the N target grouping fields and the N repetitive fields are grouped according to the position information of the N target grouping fields and the position information of the N repetitive fields in the text image to be processed, so as to obtain N field groups. Each field group of the N field groups includes one target grouping field and one repetitive field.

In operation S340, a target field value is determined.

For example, in a case that the field value represents the specific content of the field name, a field in the text image to be processed whose distance from the target field name is less than or equal to a predetermined distance may be determined from M remaining fields among the plurality of fields other than the target field name, so as to obtain at least one candidate field. Next, a target field value corresponding to the target field name may be determined from the at least one candidate field according to a type of the target field name and a type of the at least one candidate field.

For example, in a case that the field value is irrelevant to the field name, a plurality of remaining fields other than the target field name and the target field value among the plurality of fields contained in the text image to be processed may be compared with a predetermined field value, and the remaining field that is identical to the predetermined field value may be determined as a target field value.

In operation S350, a post-processing is performed on the target field value.

For example, a format of the target field value may be modified according to the type of the target field value.

For example, if it is determined that two target field values corresponding to the same target field name include a Chinese character numeral and an Arabic numeral respectively, and that a numeric value of the Chinese character numeral is different from a numeric value of the Arabic numeral, then the numeric value of the Arabic numeral may be corrected using the numeric value of the Chinese character numeral.

In operation S360, a field information is output.

For example, the field information may include the target field name and the target field value, and may further include a correspondence between the target field name and the target field value.

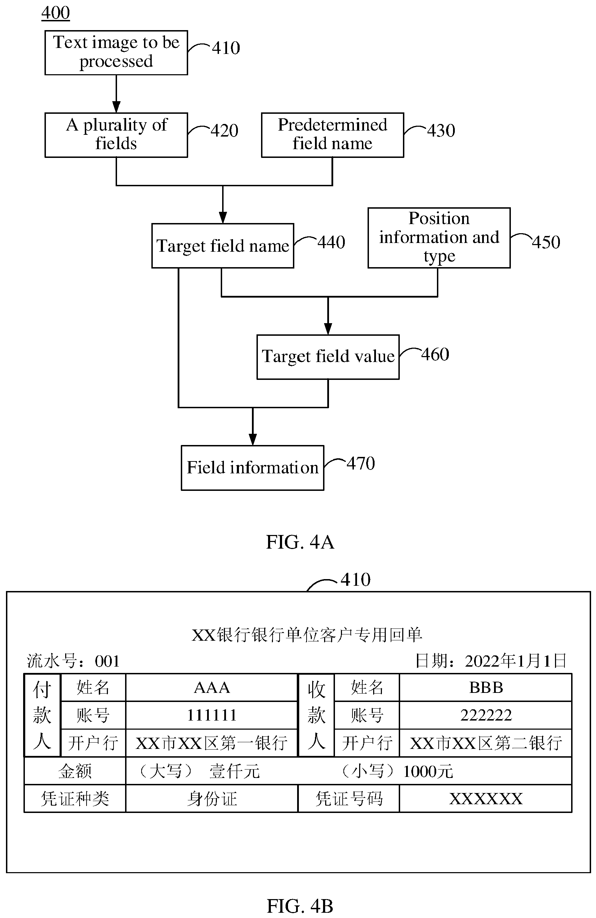

FIG. 4A shows a schematic diagram of a method of processing a text according to embodiments of the present disclosure. FIG. 4B shows a schematic diagram of a text image to be processed according to embodiments of the present disclosure.

In an embodiment 400, a text image to be processed 410 may be recognized to obtain a plurality of tokens, such as " 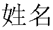 (name)", " 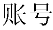 (account number)", " 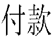 ", " 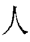 ", "111111", "XX 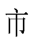 XX 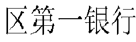 (first bank of XX district, XX city)", and so on.

Then, a plurality of tokens may be combined into a plurality of fields 420 according to a position information of each token and a semantic information of each token. For example, " 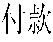 " and " 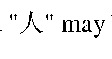 " may be combined into " 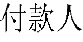 (payer)".

A target field name 440 may be determined from the plurality of fields 420 according to a predetermined field name 430. For example, the predetermined field name 430 includes " 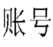 (account number)", and the field " 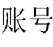 (account number)" in the text image to be processed 410 is the same as the predetermined field name 430, therefore the " 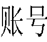 (account number)" is determined as the target field name.

The fields among the plurality of fields 420 other than the target field name 440 may be determined as a plurality of remaining fields, and a target field value 460 corresponding to the target field name 440 may be determined from the plurality of remaining fields according to a position information and a type 450. For example, the type of " 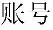 (account number)" is preset as a number type, and the type of " 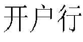 (deposit bank)" is preset as an address type. The text image to be processed 410 is recognized to obtain the field "111111" of the number type and the field "XX 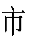 XX 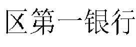 (first bank of XX district, XX city)" of the address type. As the fields, in the text image to be recognized 410, whose distance from the " 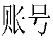 (account number)" is less than or equal to the predetermined distance include "111111" and "XX 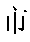 XX 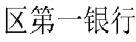 (first bank of XX district, XX city)", and the type of the " 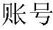 (account number)" is the same as that of the field "111111", then the field "111111" is determined as the field value corresponding to the target field name " 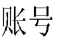 (account number)".

Then, a field information 470 may be output. The field information 470 may include the target field name 440 and the target field value 460, and may further include a correspondence between the target field name 440 and the target field value 460.

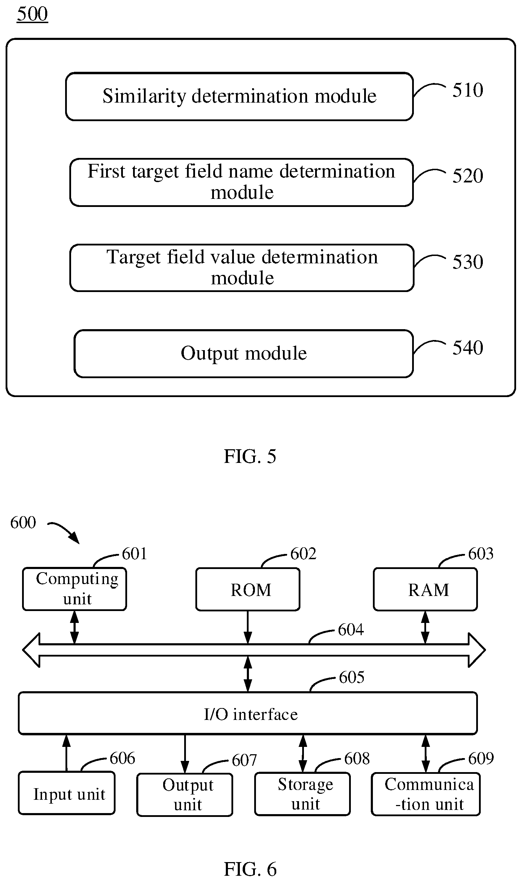

FIG. 5 shows a schematic structural block diagram of an apparatus of processing a text according to embodiments of the present disclosure.

As shown in FIG. 5, an apparatus 500 of processing a text may include a similarity determination module 510, a first target field name determination module 520, a target field value determination module 530, and an output module 540.

The similarity determination module 510 may be used to determine similarities between a plurality of fields contained in a text image to be processed and a plurality of predetermined field names.

The first target field name determination module 520 may be used to determine, from the plurality of fields, a field having a similarity greater than a similarity threshold as a target field name.

The target field value determination module 530 may be used to determine a target field value corresponding to the target field name from M remaining field among the plurality of fields other than the target field name, where M≥1.

The output module 540 may be used to output a correspondence between the target field name and the target field value.

According to other embodiments of the present disclosure, the apparatus of processing the text may further include a grouping field and repetitive field determination module and a field group determination module. The grouping field and repetitive field determination module may be used to determine, after the target field name is determined, N target grouping fields and N repetitive fields from the plurality of fields, where N≥2. The field group determination module may be used to group the N target grouping fields and the N repetitive fields according to position information of the N target grouping fields and position information of the N repetitive fields in the text image to be processed, so as to obtain N field groups. Each of the N field groups includes one target grouping field and one repetitive field.

According to other embodiments of the present disclosure, the field group determination module includes a grouping scheme determination sub-module, a total distance determination sub-module, and a field group determination sub-module. The grouping scheme determination sub-module may be used to determine a plurality of grouping schemes, and each grouping scheme of the plurality of grouping schemes is related to N candidate field groups. The total distance determination sub-module may be used to determine, for each grouping scheme, field distances respectively corresponding to the N candidate field groups in the text image to be processed, and determine a total distance based on a sum of the field distances; the field distance corresponding to each candidate field group is a distance between the target grouping field and the repetitive field in the candidate field group. The field group determination sub-module may be used to determine N candidate field groups related to a grouping scheme having a minimum total distance as the N field groups.

According to other embodiments of the present disclosure, the target field value determination module includes a candidate field determination sub-module and a target field value determination sub-module. The candidate field determination sub-module may be used to determine a field in the text image to be processed from the M remaining fields, so as to obtain at least one candidate field, and a distance between the field and the target field name is less than or equal to a predetermined distance. The target field value determination sub-module may be used to determine the target field value from the at least one candidate field according to a type of the target field name and a type of the at least one candidate field.

According to other embodiments of the present disclosure, the apparatus of processing the text may further include at least one selected from a first correction module or a second correction module. The first correction module may be used to modify a format of the target field value according to a type of the target field value. The second correction module may be used to correct a numeric value of an Arabic numeral using a numeric value of a Chinese character numeral, in response to determining that two target field values having correspondences with a same target field name include the Chinese character numeral and the Arabic numeral and that the numeric value of the Chinese character numeral is different from the numeric value of the Arabic numeral.

According to other embodiments of the present disclosure, the apparatus of processing the text may further include a second target field name determination module and a multiple-field determination module. The second target field name determination module may be used to determine, from a plurality of original fields contained in the text image to be processed, a field that is identical to any of the plurality of predetermined field names as the target field name. The multiple-field determination module may be used to determine fields among the plurality of original fields other than the target field name as the plurality of fields contained in the text image to be processed.

According to other embodiments of the present disclosure, the apparatus of processing the text may further include a token determination module and a field determination module. The token determination module may be used to recognize the text image to be processed to obtain a plurality of tokens. The field determination module may be used to combine at least two tokens among the plurality of tokens into a field according to a distance between the plurality of tokens in the text image to be processed and a semantic information of each of the plurality of tokens, so as to obtain the plurality of fields.

In the technical solution of the present disclosure, an acquisition, a storage, a use, a processing, a transmission, a provision and a disclosure of user personal information involved comply with provisions of relevant laws and regulations, and do not violate public order and good custom. In the technical solution of the present disclosure, the acquisition or collection of user personal information has been authorized or allowed by users.

According to embodiments of the present disclosure, the present disclosure further provides an electronic device, a readable storage medium, and a computer program product.

FIG. 6 shows a schematic block diagram of an exemplary electronic device 600 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the method of processing the text. For example, in some embodiments, the method of processing the text may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of processing the text described above. Alternatively, in other embodiments, the computing unit 601 may be configured to perform the method of processing the text by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of processing a text, comprising:
determining (S210) similarities between a plurality of fields contained in a text image to be processed and a plurality of predetermined field names;
determining (S220), from the plurality of fields, a field having a similarity greater than a similarity threshold as a target field name;
determining (S230) a target field value corresponding to the target field name from M remaining field among the plurality of fields other than the target field name, wherein M 1; and
outputting (S240) a correspondence between the target field name and the target field value.

2. The method according to claim 1, further comprising: after the target field name is determined,
determining, from the plurality of fields, N target grouping fields and N repetitive fields, wherein N≥2; and
grouping the N target grouping fields and the N repetitive fields according to position information of the N target grouping fields and position information of the N repetitive fields in the text image to be processed, so as to obtain N field groups, wherein each of the N field groups comprises one target grouping field and one repetitive field.

3. The method according to claim 2, wherein the grouping the N target grouping fields and the N repetitive fields according to position information of the N target grouping fields and position information of the N repetitive fields in the text image to be processed so as to obtain N field groups comprises:
determining a plurality of grouping schemes, wherein each grouping scheme of the plurality of grouping schemes is related to N candidate field groups;
determining, for each grouping scheme, field distances respectively corresponding to the N candidate field groups in the text image to be processed, and determining a total distance based on a sum of the field distances, wherein the field distance corresponding to each candidate field group is a distance between the target grouping field and the repetitive field in the candidate field group; and
determining N candidate field groups related to a grouping scheme having a minimum total distance as the N field groups.

4. The method according to claim 1, wherein the determining a target field value corresponding to the target field name from M remaining field among the plurality of fields other than the target field name comprises:
determining a field in the text image to be processed from the M remaining field, so as to obtain at least one candidate field, wherein a distance between the field and the target field name is less than or equal to a predetermined distance; and
determining the target field value from the at least one candidate field according to a type of the target field name and a type of the at least one candidate field.

5. The method according to claim 1, further comprising:
modifying a format of the target field value according to a type of the target field value; and/or
in response to determining that two target field values having correspondences with a same target field name comprise a Chinese character numeral and an Arabic numeral and that a numeric value of the Chinese character numeral is different from a numeric value of the Arabic numeral,
correcting the numeric value of the Arabic numeral using the numeric value of the Chinese character numeral.

6. The method according to claim 1, further comprising:
determining, from a plurality of original fields contained in the text image to be processed, a field that is identical to any of the plurality of predetermined field names as the target field name; and
determining fields among the plurality of original fields other than the target field name as the plurality of fields contained in the text image to be processed.

7. The method according to claim 1, further comprising:
recognizing the text image to be processed, so as to obtain a plurality of tokens; and
combining at least two tokens among the plurality of tokens into a field according to a distance between the plurality of tokens in the text image to be processed and a semantic information of each of the plurality of tokens, so as to obtain the plurality of fields.

8. An apparatus (500) of processing a text, comprising:
a similarity determination module (510) configured to determine similarities between a plurality of fields contained in a text image to be processed and a plurality of predetermined field names;
a first target field name determination module (520) configured to determine, from the plurality of fields, a field having a similarity greater than a similarity threshold as a target field name;
a target field value determination module (530) configured to determine a target field value corresponding to the target field name from M remaining field among the plurality of fields other than the target field name, wherein M≥1; and
an output module (540) configured to output a correspondence between the target field name and the target field value.

9. The apparatus (500) according to claim 8, further comprising:
a grouping field and repetitive field determination module configured to determine, after the target field name is determined, N target grouping fields and N repetitive fields from the plurality of fields, wherein N≥2; and
a field group determination module configured to group the N target grouping fields and the N repetitive fields according to position information of the N target grouping fields and position information of the N repetitive fields in the text image to be processed, so as to obtain N field groups, wherein each of the N field groups comprises one target grouping field and one repetitive field.

10. The apparatus (500) according to claim 9, wherein the field group determination module comprises:
a grouping scheme determination sub-module configured to determine a plurality of grouping schemes, wherein each grouping scheme of the plurality of grouping schemes is related to N candidate field groups;
a total distance determination sub-module configured to determine, for each grouping scheme, field distances respectively corresponding to the N candidate field groups in the text image to be processed, and determine a total distance based on a sum of the field distances, wherein the field distance corresponding to each candidate field group is a distance between the target grouping field and the repetitive field in the candidate field group; and
a field group determination sub-module configured to determine N candidate field groups related to a grouping scheme having a minimum total distance as the N field groups.

11. The apparatus (500) according to claim 8, wherein the target field value determination module (530) comprises:
a candidate field determination sub-module configured to determine a field in the text image to be processed from the M remaining field, so as to obtain at least one candidate field, wherein a distance between the field and the target field name is less than or equal to a predetermined distance; and
a target field value determination sub-module configured to determine the target field value from the at least one candidate field according to a type of the target field name and a type of the at least one candidate field.

12. The apparatus (500) according to claim 8, further comprising:
a first correction module configured to modify a format of the target field value according to a type of the target field value; and/or
a second correction module configured to correct a numeric value of an Arabic numeral using a numeric value of a Chinese character numeral, in response to determining that two target field values having correspondences with a same target field name comprise the Chinese character numeral and the Arabic numeral and that the numeric value of the Chinese character numeral is different from the numeric value of the Arabic numeral.

13. An electronic device (600), comprising:
at least one processor; and
a memory communicatively connected to the at least one processor, wherein the memory stores instructions executable by the at least one processor, and the instructions, when executed by the at least one processor, are configured to cause the at least one processor to implement the method of any one of claims 1 to 7.

14. A non-transitory computer-readable storage medium having computer instructions therein, wherein the computer instructions are configured to cause a computer system to implement the method of any one of claims 1 to 7.

15. A computer program product containing a computer program, wherein the computer program, when executed by a processor, is configured to cause the processor to implement the method of any one of claims 1 to 7.
